Europäisches Patentamt

European Patent Office

Office européen des brevets

(11) Veröffentlichungsnummer: **0 509 266 A1**

# EUROPÄISCHE PATENTANMELDUNG

(21) Anmeldenummer: **92104841.9**

(22) Anmeldetag: **20.03.92**

(51) Int. Cl.5: **H04N 9/79**

(30) Priorität: **13.04.91 DE 4112203**

(43) Veröffentlichungstag der Anmeldung:
**21.10.92 Patentblatt 92/43**

(84) Benannte Vertragsstaaten:
**AT BE CH DE FR GB IT LI**

(71) Anmelder: **GRUNDIG E.M.V.**
**Elektro-Mechanische Versuchsanstalt Max**
**Grundig holländ. Stiftung & Co. KG.**
**Kurgartenstrasse 37**
**W-8510 Fürth/Bay.(DE)**

(72) Erfinder: **Kays, Rüdiger, Dr., Grundig E.M.V.**
**Max Grundig**
**holländ, Stiftung & Co. KG, Kurgartenstrasse**
**37**
**W-8510 Fuerth(DE)**

(54) **Verfahren und Videorecorder zur Aufzeichnung von Farbfernsehsignalen nach dem Color-Under-Verfahren.**

(57) Die Erfindung betrifft ein Verfahren und einen Videorecorder zur Aufzeichnung von Farbfernsehsignalen nach dem Color-Under-Verfahren, wobei die Bandbreite des aufzuzeichnenden Luminanz- und Chrominanzsignals halbbildweise gegensinnig verändert wird. Dadurch wird es im Unterschied zu herkömmlichen Verfahren möglich, Chrominanzsignale höherer Auflösung aufzuzeichnen.

FIGUR 2

Die Erfindung betrifft ein Verfahren und einen Videorecorder zur Aufzeichnung von Farbfernsehsignalen nach dem Color-Under-Verfahren mit den im Oberbegriff des Anspruchs 1 bzw. 2 angegebenen Merkmalen. Die Erfindung betrifft weiterhin einen Videorecorder zur Wiedergabe von nach dem Color-Under-Verfahren aufgezeichneten Fernsehsignalen.

Einer der Schwachpunkte der heutigen nach dem Color-Under-Verfahren arbeitenden Heimvideorecorder ist die geringe Bandbreite, die zur Aufzeichnung der Chrominanzkomponente der Farbfernsehsignale zur Verfügung steht. Dies ist darauf zurückzuführen, daß das zur Aufzeichnung insgesamt verfügbare Spektrum in einen Bereich für die frequenzmodulierte Luminanzkomponente und einen stark begrenzten Bereich für die frequenzumgesetzte Chrominanzkomponente aufgeteilt wird.

Mit dem S-VHS-System wird zwar eine Erhöhung der Luminanzbandbreite erzielt, die Chrominanzbandbreite und damit die Qualität des Chrominanzsignals bleibt jedoch weitgehend unverändert.

Aus der DE-A1-3306978 ist ein Videorecorder bekannt, bei dem in den Videoschrägspuren, in denen ein frequenzmoduliertes Luminanzsignal und ein in einen niedrigen Frequenzbereich umgesetztes Chrominanzsignal aufgezeichnet wird, zusätzlich frequenzmodulierte Tonsignale aufgezeichnet werden. Die Frequenz der Tonträger wird von Halbbild zu Halbbild umgeschaltet. In den ungeradzahligen Halbbildern ist die Frequenz der Tonträger so gewählt, daß sie innerhalb des Bereiches des frequenzmodulierten Luminanzsignals liegt. In den geradzahligen Halbbildern ist die Frequenz der Tonträger so gewählt, daß sie im Bereich zwischen dem frequenzumgesetzten Chrominanzsignal und dem frequenzmodulierten Luminanzsignal liegt, wobei im Vergleich zu den ungeradzahligen Halbbildern sowohl die Bandbreite des frequenzumgesetzten Chrominanzsignals als auch die Bandbreite des frequenzmodulierten Luminanzsignals verkleinert ist.

Aus der DE-A1-3731166 ist ein Videorecorder bekannt, bei dem die Aufzeichnung des Luminanz- bzw. Leuchtdichtesignals mittels eines FM-Trägers erfolgt und bei dem zur Vergrößerung der Bandbreite der aufgezeichneten Chrominanz- bzw. Farbartsignale der Farbträger am oberen Ende des freien Frequenzbereichs unterhalb des Frequenzbereichs des FM-Trägers liegt und mit den Farbartsignalen nach dem Restseitenbandverfahren moduliert wird.

Weiterhin ist aus der DE-A1-3732734 ein Videorecorder bekannt, bei dem die Aufzeichnung des Leuchtdichtesignals mittels eines FM-Trägers erfolgt und bei dem zur Vergrößerung der Bandbreite der aufgezeichneten Farbsignale U und V diese zeilensequentiell nach dem Einseitenbandverfahren im freien Frequenzbereich unterhalb des Bildträgers aufgezeichnet werden.

Der Erfindung liegt die Aufgabe zugrunde, einen Weg aufzuzeigen, wie bei einem nach dem Color-Under Verfahren arbeitenden Videorecorder die Qualität des Chrominanzsignals verbessert werden kann.

Diese Aufgabe wird durch einen Videorecorder mit den in den Patentansprüchen angegebenen Merkmalen gelöst.

Die Erfindung geht davon aus, daß bei den heute verbreiteten Farbfernsehsystemen PAL, NTSC und SECAM die Halbbildfrequenz 50 bzw. 60 Hz beträgt, daß andererseits aber 25 bzw. 30 Bewegungsphasen pro Sekunde für die höherfrequenten Anteile der Luminanz- und der Chrominanzkomponente ausreichend sind.

Im folgenden wird die Erfindung anhand von Ausführungsbeispielen näher beschrieben.

Es zeigt

Figur 1     die erfindungsgemäße spektrale Verteilung von Luminanz- und Chrominanzkomponente bei der Aufzeichnung des ersten und zweiten Halbbildes eines Farbfernsehsignals anhand eines Beispiels,

Figur 2     ein Blockschaltbild zur grundsätzlichen Erläuterung des Aufzeichnungsvorganges,

Figur 3     ein Blockschaltbild zur Erläuterung einer Schaltung zur Erzeugung des frequenzmodulierten Luminanzsignals und des frequenzumgesetzten Chrominanzsignals, die den Eingängen E1 bzw. E2 der in Figur 2 gezeigten Schaltung zugeführt werden,

Figur 4     ein Diagramm zur Erläuterung der an verschiedenen Schaltungspunkten von Figur 2 und 3 anliegenden Signale, und

Figur 5     ein Blockschaltbild zur Erläuterung des Wiedergabevorganges.

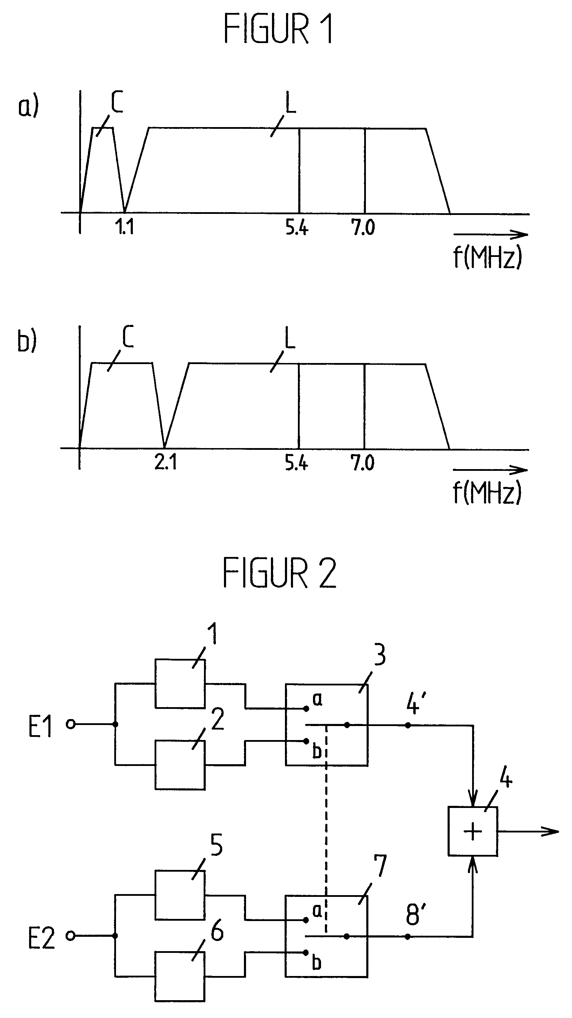

Die Figur 1 zeigt, wie beim beanspruchten Aufzeichnungsverfahren bzw. Videorecorder während der beiden Halbbilder des Farbfernsehsignals das zur Verfügung stehende Spektrum genutzt wird. Während der ungeradzahligen Halbbilder liegt das zur Aufzeichnung des frequenzumgesetzten Chrominanzsignals zur Verfügung gestellte Frequenzintervall zwischen 0 und 1.1 MHz. Das zur Aufzeichnung des frequenzmodulierten Luminanzsignals verfügbare Frequenzintervall reicht von 1,1 MHz bis zu einer durch das verwendete Band-Kopf-System festgelegten oberen Grenzfrequenz, wobei der Hubbereich zwischen 5,4 und 7,0 MHz liegt. Diese Aufteilung entspricht der beim S-VHS-System üblichen spektralen Verteilung. Während der geradzahligen Halbbilder liegt jedoch das zur Aufzeichnung des frequenzumgesetzten Chrominanzsignals zur Verfügung gestellte Frequenzintervall zwischen 0 und 2,1 MHz. Das zur Aufzeichnung des frequenzmodulierten Luminanzsignals verfügbare Frequenzintervall reicht von 2,1 MHz bis zu der durch das verwendete Band-Kopf-System festgelegten oberen Grenzfrequenz. Folglich können in jedem zweiten Halbbild höherfrequente Chrominanzsignale aufgezeichnet werden.

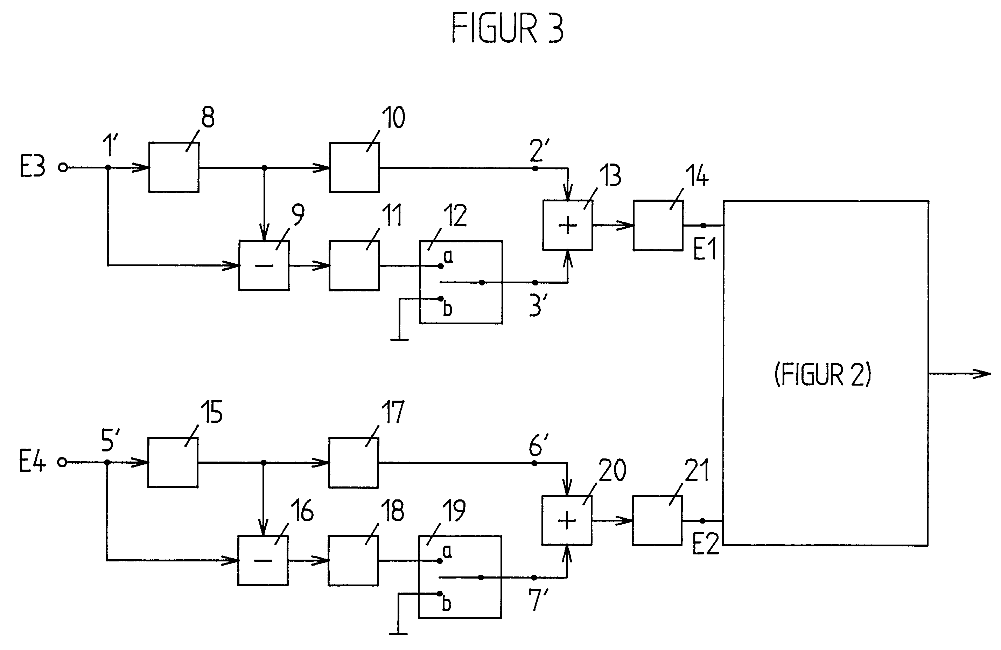

Die Figur 2 zeigt ein Blockschaltbild zur grundsätzlichen Erläuterung der aufzeichnungsseitigen Signalverarbeitung.

Dem Eingang E1 der gezeigten Schaltung wird das frequenzmodulierte Luminanzsignal zugeführt. Dieses wird an ein erstes Hochpaßfilter 1 mit einer unteren Grenzfrequenz von 1,1 MHz und an ein parallel dazu angeordnetes zweites Hochpaßfilter mit einer unteren Grenzfrequenz von 2,1 MHz angelegt. Das Ausgangssignal des ersten Hochpaßfilters 1 wird der Klemme a eines Schalters 3 zugeführt. Das Ausgangssignal des zweiten Hochpaßfilters 2 wird an die Klemme b des Schalters 3 angelegt. Das Ausgangssignal des Schalters 3 wird einer Addierschaltung 4 zugeführt.

Dem Eingang E2 der gezeigten Schaltung wird das in einen unterhalb des Frequenzbereichs des frequenzmodulierten Luminanzsignals liegenden Frequenzbereich frequenzumgesetzte Chrominanzsignal zugeführt. Dieses wird an ein erstes Tiefpaßfilter 5 mit einer oberen Grenzfrequenz von 1,1 MHz und an ein parallel dazu angeordnetes zweites Tiefpaßfilter 6 mit einer oberen Grenzfrequenz von 2,1 MHz angelegt. Das Ausgangssignal des ersten Tiefpaßfilters 5 wird der Klemme a eines Schalters 7 zugeführt. Das Ausgangssignal des zweiten Tiefpaßfilters 6 wird an die Klemme b des Schalters 7 angelegt. Das Ausgangssignal des Schalters 7 wird ebenfalls der Addierschaltung 4 zugeführt.

Das Ausgangssignal der Addierschaltung 4 wird mittels dem bzw. den rotierenden Videoköpfen in Schrägspuren eines Magnetbandes aufgezeichnet.

Während der ungeradzahligen Halbbilder des Farbfernsehsignals sind die Schalter 3 und 7 für das jeweils an der Klemme a anliegende Signal durchlässig, so daß ein Signal aufgezeichnet wird, dessen spektrale Verteilung aus Figur 1a ersichtlich ist. Dieses Signal zeichnet sich durch eine erhöhte Luminanzauflösung aus.

Während der geradzahligen Halbbilder des Farbfernsehsignals sind die Schalter 3 und 7 für das jeweils an der Klemme b anliegende Signal durchlässig, so daß ein Signal aufgezeichnet wird, dessen spektrale Verteilung aus Figur 1b ersichtlich ist. Dieses Signal zeichnet sich durch eine erhöhte Chrominanzauflösung aus.

Bei dem in der Figur gezeigten Videorecorder werden folglich neben den niederfrequenten Luminanz- und Chrominanzsignalanteilen, die in jedem Halbbild aufgezeichnet werden, halbbildweise abwechselnd höherfrequente Luminanz- bzw. Chrominanzsignalanteile aufgezeichnet. Bei dieser Aufzeichnung weisen diese höherfrequenten Signalanteile zwar - je nachdem, ob PAL-, NTSC- oder SECAM-Signale vorliegen - nur 25 bzw. 30 Bewegungsphasen pro Sekunde auf, doch hat sich gezeigt, daß dies für eine qualitativ gute Wiedergabe bewegter Szenen vollkommen ausreichend ist.

Die Figur 3 zeigt ein Blockschaltbild zur Erläuterung einer Schaltung zur Erzeugung des frequenzmodulierten Luminanzsignals und des frequenzumgesetzten Chrominanzsignals, die den Eingängen E1 bzw. E2 der in Figur 2 gezeigten Schaltung zugeführt werden.

An den Eingang E3 der in Figur 3 gezeigten Schaltung wird die Luminanzkomponente eines Farbfernsehsignals angelegt. Diese wird einer Schaltung zur Aufteilung der Luminanzkomponente in einen niederfrequenten und einen höherfrequenten Anteil zugeführt, welche aus einem Tiefpaßfilter 8 und einem Subtrahierer 9 besteht. Am Ausgang des Tiefpaßfilters 8, welches eine obere Grenzfrequenz von 3 MHz hat, steht der niederfrequente Anteil der Luminanzkomponente zur Vefügung. Am Ausgang des Subtrahierers 9, in welchem eine Subtraktion des niederfrequenten Anteils der Luminanzkomponente von der nicht bandbegrenzten Luminanzkomponente erfolgt, steht der höherfrequente Anteil der Luminanzkomponente zur Verfügung.

Der niederfrequente Anteil der Luminanzkomponente wird in einer Verzögerungsschaltung 10 um die Dauer von 20 ms, die der Dauer eines Halbbildes entspricht, verzögert. Der höherfrequente Anteil der Luminanzkomponente wird einer Schaltung 11 zur Halbbildmittelung zugeführt, in welcher ein Mittelwert aus einem Bildpunkt des ersten Halbbildes und dem im wiedergegebenen Bild unmittelbar darüber angeordneten Bildpunkt des zweiten Halbbildes durchgeführt wird. Das Ausgangssignal der Schaltung 11 zur Halbbildmittelung wird einem Schalter 12 zugeführt, welcher sich für die Dauer eines Halbbildes in der Schaltstellung a und für die Dauer des nächsten Halbbildes in der Schaltstellung b befindet. Das Ausgangssignal des Schalters 12 wird der Additionsschaltung 13 zugeführt, in der eine Addition des verzögerten niederfrequenten Anteils der Luminanzkomponente und des Ausgangssignals des Schalters 12 erfolgt. Das so erhaltene Signal wird im Frequenzmodulator 14 frequenzmoduliert und dann dem Schaltungspunkt E1 zugeführt, welcher dem Eingang E1 der in Figur 2 gezeigten Schaltung entspricht.

An den Eingang E4 der in Figur 3 gezeigten Schaltung werden die in Zeitmultiplexform vorliegenden Farbdifferenzsignale U und V des Farbfernsehsignals angelegt. Diese werden einer Schaltung zur Aufteilung der Farbdifferenzsignale in einen niederfrequenten und einen höherfrequenten Anteil zugeführt, welche aus einem Tiefpaßfilter 15 und einem Subtrahierer 16 besteht. Am Ausgang des Tiefpaßfilters 15, welches eine obere Grenzfrequenz von 0,5 MHz hat, steht der niederfrequente Anteil der Farbdifferenzsignale zur Verfügung. Am Ausgang des Subtrahierers 16, in welchem eine Subtraktion des niederfrequenten Anteils der Farbdifferenzsignale von den nicht bandbegrenzten Farbdifferenzsignalen erfolgt, steht der höherfreqente Anteil der Farbdifferenzsignale zur Verfügung.

Der niederfrequente Anteil der Farbdifferenzsignale wird in einer Verzögerungsschaltung 17 um die Dauer von 20 ms, die der Dauer eines Halbbildes entspricht, verzögert. Der höherfrequente Anteil der Farbdifferenzsignale wird einer Schaltung 18 zur Halbbildmittelung zugeführt, in welcher ein Mittelwert aus einem Bildpunkt des ersten Halbbildes und dem im wiedergegebenen Bild unmittelbar darüber angeordneten Bildpunkt des zweiten Halbbildes durchgeführt wird. Das Ausgangssignal der Schaltung 18 zur Halbbildmittelung wird einem Schalter 19 zugeführt, welcher sich für die Dauer eines Halbbildes in der Schaltstellung a und für die Dauer des nächsten Halbbildes in der Schaltstellung b befindet. Das Ausgangssignal des Schalters 19 wird der Additionsschaltung 20 zugeführt, in der eine Addition des verzögerten niederfrequenten Anteils der Farbdifferenzsignale und des Ausgangssignals des Schalters 19 erfolgt. Das so erhaltene Signal wird in einer Schaltung 21 die einen PAL-Modulator und einen Frequenzumsetzer enthält, in ein Chrominanzsignal umgesetzt, dessen Frequenzbereich unterhalb des Frequenzbereichs des frequenzmodulierten Luminanzsignals liegt und dann dem Schaltungspunkt E2 zugeführt, welcher dem Eingang E2 der in Figur 2 gezeigten Schaltung entspricht.

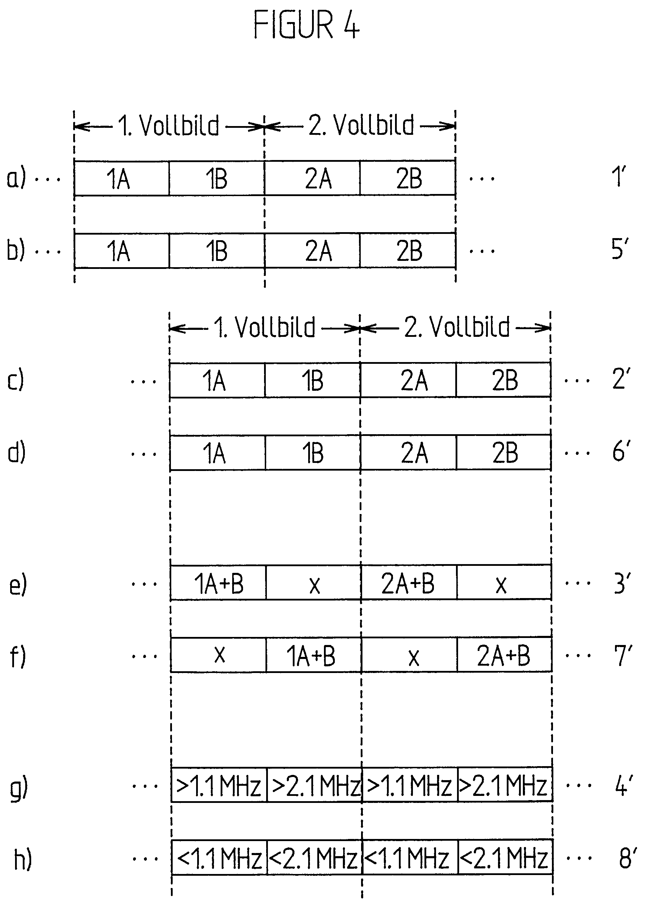

Die Figur 4 zeigt ein Diagramm zur Erläuterung der an verschiedenen Schaltungspunkten von Figur 2 und 3 anliegenden Signale. Aus Figur 4a ist die Luminanzkomponente der Halbbilder 1A und 1B des ersten Vollbildes und der Halbbilder 2A und 2B des zweiten Vollbildes ersichtlich, wie sie am Schaltungspunkt 1' von Figur 3 auftritt. Die Figur 4b zeigt die Farbdifferenzsignale der Halbbilder 1A und 1B des ersten Vollbildes und der Halbbilder 2A und 2B des zweiten Vollbildes, wie sie am Schaltungspunkt 5' von Figur 3 vorliegen. In den Figuren 4c und 4d ist der am Schaltungspunkt 2' bzw. 6' auftretende niederfrequente Anteil der Luminanzkomponenten bzw. der Farbdifferenzsignale der Halbbilder 1A, 1B, 2A und 2B gezeigt. Es ist ersichtlich, daß dieser Anteil jeweils um die Dauer eines Halbbildes gegenüber den Eingangssignalen verzögert ist.

Die Figur 4e zeigt den durch die Halbbildmittelung gewonnenen höherfrequenten Luminanzanteil, wie er am Ausgang des Schalters 12 von Figur 3 vorliegt. Es ist ersichtlich, daß der aus dem ersten und zweiten Halbbild des ersten Vollbildes durch Halbbildmittelung gewonnene höherfrequente Luminanzanteil gleichzeitig mit dem niederfrequenten Luminanzanteil des ersten Halbbildes des ersten Vollbildes auftritt. Ebenso tritt der aus dem ersten und zweiten Halbbild des zweiten Vollbildes durch Halbbildmittelung gewonnene höherfrequente Luminanzanteil gleichzeitig mit dem niederfrequenten Luminanzanteil des ersten Halbbildes des zweiten Vollbildes auf.

Die Figur 4f zeigt den durch die Halbbildmittelung gewonnenen höherfrequenten Farbdifferenzsignalanteil, wie er am Ausgang des Schalters 19 von Figur 3 auftritt. Es ist ersichtlich, daß der aus dem ersten und zweiten Halbbild des ersten Vollbildes durch Halbbildmittelung gewonnene höherfrequente Farbdifferenzsignalanteil gleichzeitig mit dem niederfrequenten Farbdifferenzsignalanteil des zweiten Halbbildes des ersten Vollbildes auftritt. Ebenso tritt der aus dem ersten und zweiten Halbbild des zweiten Vollbildes durch Halbbildmittelung gewonnene höherfrequente Farbdifferenzsignalanteil gleichzeitig mit dem niederfrequenten Farbdifferenzsignalanteil des zweiten Halbbildes des zweiten Vollbildes auf.

In den in den Figuren 4e und 4f mit x bezeichneten Bereichen wird keine Information übertragen, weil der Kanal durch die Übertragung des jeweils anderen höherfrequenten (Luminanz- bzw. Chrominanz-) Signalanteils belegt ist.

Die Figuren 4g und 4h zeigen auf, in welchen Frequenzbereichen die an den Schaltungspunkten 4' und 8' in Figur 2 auftretenden Luminanz- bzw. Chrominanzsignale während der einzelnen Halbbilder liegen. Es ist ersichtlich, daß im ersten Halbbild des ersten und zweiten Vollbildes die untere Bandgrenze für das frequenzmodulierte Luminanzsignal und die obere Bandgrenze für das Chrominanzsignal jeweils bei 1,1 MHz liegt, während im zweiten Halbbild des ersten und zweiten Vollbildes die untere Bandgrenze für das frequenzmodulierte Luminanzsignal und die obere Bandgrenze für das Chrominanzsignal jeweils bei 2,1 MHz liegen.

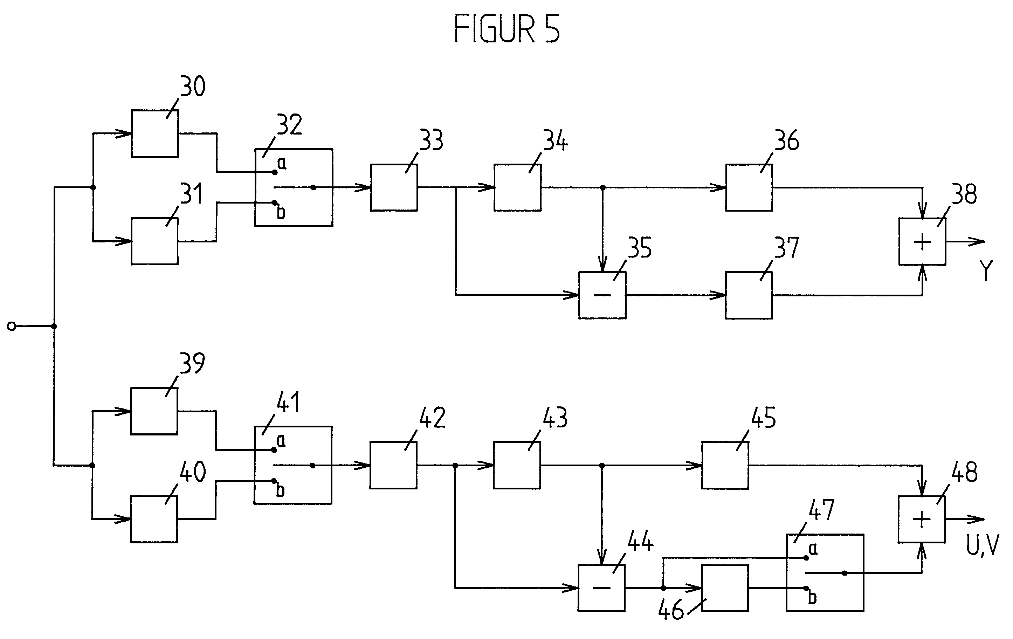

Die Figur 5 zeigt ein Blockschaltbild zur Erläuterung des Wiedergabevorganges. Das vom Magnetband wiedergegebene Signal wird einem ersten Hochpaßfilter 30 und einem parallel dazu angeordneten zweiten Hochpaßfilter 31 zugeführt. Die untere Grenzfrequenz des ersten Hochpaßfilters 30 beträgt 1,1 MHz, die des zweiten Hochpaßfilters 31 2,1 MHz. Das Ausgangssignal des ersten Hochpaßfilters 30 wird der Klemme a eines Schalters 32, das Ausgangssignal des zweiten Hochpaßfilters 31 der Klemme b des Schalters 32 zugeführt. Das Ausgangssignal des Schalters 32 wird an einen Frequenzdemodulator 33 angelegt.

Während der geradzahligen Halbbilder des Farbfernsehsignals ist der Schalter 32 für das an der Klemme b anliegende Signal durchlässig, so daß das in den geradzahligen Halbbildern übertragene Luminanzsignal, dessen untere Bandgrenze bei 2,1 MHz liegt, mittels des zweiten Hochpaßfilters 31 aus dem wiedergegebenen Signal abgetrennt und dem Frequenzdemodulator 33 zugeführt wird.

Während der ungeradzahligen Halbbilder des Farbfernsehsignals ist der Schalter 32 für das an der Klemme a anliegende Signal durchlässig, so daß das in den ungeradzahligen Halbbildern übertragene Luminanzsignal, dessen untere Bandgrenze bei 1,1 MHz liegt, mittels des ersten Hochpaßfilters 30 aus dem wiedergegebenen Signal abgetrennt und dem Frequenzdemodulator 33 zugeführt wird.

Das demodulierte Signal wird einer Schaltung zur Aufteilung der Luminanzkomponente in einen niederfrequenten und einen höherfrequenten Anteil zugeführt, welche aus einem Tiefpaßfilter 34 und einem Subtrahierer 35 besteht. Am Ausgang des Tiefpaßfilters 34, welches eine obere Grenzfrequenz von 3 MHz hat, steht der niederfrequente Anteil der Luminanzkomponente zur Verfügung. Am Ausgang des Subtrahierers 35, in welchem eine Subtraktion des niederfrequenten Anteils der Luminanzkomponente von der nicht bandbegrenzten Luminanzkomponente erfolgt, steht der höherfrequente Anteil der Luminanzkomponete zur Verfügung.

Der niederfrequente Anteil der Luminanzkomponente wird in einer Verzögerungsschaltung 36 um die Dauer von 20 ms, die der Dauer eines Halbbildes entspricht, verzögert. Der höherfrequente Anteil der Luminanzkomponente wird einem Speicher 37 zugeführt und aus diesem zeitrichtig sowohl zum zugehörigen niederfrequenten Anteil der Luminanzkomponente des ersten als auch des zweiten Halbbildes ausgelesen. Die genannten Anteile werden im Addierer 38 addiert. Am Ausgang des Addierers 38 steht dann die Luminanzkomponente des Farbfernsehsignals zur Verfügung.

Das vom Magnetband wiedergegebene Signal wird weiterhin einem ersten Tiefpaßfilter 39 und einem parallel dazu angeordneten zweiten Tiefpaßfilter 40 zugeführt. Die obere Grenzfrequenz des ersten Tiefpaßfilters 39 beträgt 1,1 MHz, die des zweiten Tiefpaßfilters 40 2,1 MHz.

Das Ausgangssignal des ersten Tiefpaßfilters 39 wird der Klemme a eines Schalters 41, das Ausgangssignal des zweiten Tiefpaßfilters der Klemme b des Schaltes 41 zugeführt. Das Ausgangssignal des Schalters 41 wird an eine Schaltung 42 angelegt, die einen Frequenzrückumsetzer und einen PAL-Demodulator enthält.

Während der geradzahligen Halbbilder des Farbfernsehsignals ist der Schalter 41 für das an der Klemme b anliegende Signal durchlässig, so daß das in den geradzahligen Halbbildern übertragene Chrominanzsignal, dessen obere Bandgrenze bei 2,1 MHz liegt, mittels des zweiten Tiefpaßfilters 40 aus dem wiedergegebenen Signal abgetrennt und der Schaltung 42 zugeführt wird.

Während der ungeradzahligen Halbbilder des Farbfernsehsignals ist der Schalter 41 für das an der Klemme a anliegende Signal durchlässig, so daß das in den ungeradzahligen Halbbildern übertragene Chrominanzsignal, dessen obere Bandgrenze bei 1,1 MHz liegt, mittels des ersten Tiefpaßfilters 39 aus dem wiedergegebenen Signal abgetrennt und der Schaltung 42 zugeführt wird.

Das in seinen ursprünglichen Frequenzbereich rückumgesetzte Signal wird einer Schaltung zur Aufteilung der Farbdifferenzsignale in einen niederfrequenten und einen höherfrequenten Anteil zugeführt, welche aus einem Tiefpaßfilter 43 und einem Subtrahierer 44 besteht. Am Ausgang des Tiefpaßfilters 43, welches eine obere Grenzfrequenz von 0,5 MHz hat, steht der niederfrequente Anteil der Farbdifferenzsignale zur Verfügung. Am Ausgang des Subtrahierers 44, in welchem eine Subtraktion des niederfrequenten Anteils der Farbdifferenzsignale von den nicht bandbegrenzten Farbdifferenzsignalen erfolgt, steht der höherfrequente Anteil der Farbdifferenzsignale zur Verfügung.

Der niederfrequente Anteil der Farbdifferenzsignale wird in einer Verzögerungsschaltung 45 um die Dauer von 20 ms, die der Dauer eines Halbbildes enspricht, verzögert. Der höherfrequente Anteil der Farbdifferenzsignale wird der Klemme a eines Schalters 47 zugeführt sowie in einen Speicher 46 eingeschrieben. Das Ausgangssignal des Speichers 46 wird der Klemme b des Schalters 47 zugeführt. Die Umschaltung des Schalters 47 sowie das Auslesen aus dem Speicher 46 erfolgt derart, daß der höherfrequente Anteil der Farbdifferenzsignale zeitrichtig sowohl dem zugehörigen niederfrequenten Anteil der Farbdifferenzsignale des ersten als auch des zweiten Halbbildes vorliegt und im Addierer 48 zu den genannten niederfrequenten Anteilen hinzuaddiert werden kann. Am Ausgang des Addierers 48 stehen dann die in Zeitmultiplexform vorliegenden Farbdifferenzsignale zur Verfügung.

Die vorstehend anhand von Ausführungsbeispielen beschriebene Erfindung ist für alle nach dem Color-Under-Verfahren arbeitenden Videorecorder sowie für alle Farbfernsehsysteme geeignet. Als Alternative zu den beschriebenen Ausführungsbeispielen, bei denen die Farbdifferenzsignale in Zeitmultiplexform in einem gemeinsamen Kanal verarbeitet werden, ist es auch möglich, für jedes der Farbdifferenzsignale einen eigenen Kanal vorzusehen. Der Vorteil dieser Ausführungsform besteht darin, daß die Datenrate in diesem Kanal um 50% reduziert ist.

**Patentansprüche**

1. Verfahren zur Aufzeichnung von Farbfernsehsignalen nach dem Color-Under-Verfahren, wobei
   - das Luminanzsignal des Farbfernsehsignals frequenzmoduliert,
   - das Chrominanzsignal in einen unterhalb des Frequenzbereichs des frequenzmodulierten Luminanzsignals liegenden Frequenzbereich frequenzumgesetzt, und
   - das frequenzmodulierte Luminanzsignal und das frequenzumgesetzte Chrominanzsignal magnetisch aufgezeichnet werden,

   **dadurch gekennzeichnet**, daß

   die Bandbreite des aufzuzeichnenden Luminanz- und Chrominanzsignals halbbildweise gegensinnig verändert wird.

2. Videorecorder zur Aufzeichnung von Farbfernsehsignalen nach dem Color-Under-Verfahren, mit
   - einem Frequenzmodulator zur Frequenzmodulation eines Trägersignals mit dem Luminanzsignal des Farbfernsehsignals,
   - ein erstes Hochpaßfilter zur Hochpaßfilterung des frequenzmodulierten Luminanzsignals,
   - einen Frequenzumsetzer zur Frequenzumsetzung des Chrominanzsignals des Farbfernsehsignals in einen unterhalb des Frequenzbereichs des frequenzmodulierten Luminanzsignals liegenden Frequenzbereich, und
   - ein erstes Tiefpaßfilter zur Tiefpaßfilterung des frequenzumgesetzten Chrominanzsignals,

   **gekennzeichnet durch**
   - ein parallel zum ersten Hochpaßfilter (1) angeordnetes zweites Hochpaßfilter (2), dessen untere Grenzfrequenz höher ist als die des ersten Hochpaßfilters (1),
   - ein parallel zum ersten Tiefpaßfilter (5) angeordnetes zweites Tiefpaßfilter (6), dessen obere Grenzfrequenz höher ist als die des ersten Tiefpaßfilters, und
   - eine Schalteinheit (3, 7), mittels der zwischen den genannten ersten (1, 5) und zweiten (2, 6) Filtern halbbildweise abwechselnd umgeschaltet wird.

3. Videorecorder nach Anspruch 2,
   **gekennzeichnet durch**
   eine vor dem Frequenzmodulator (14) angeordnete Schaltung (8, 9) zur Aufteilung des Luminanzsignals des Farbfernsehsignals in einen niederfrequenten und einen höherfrequenten Anteil,
   eine Verzögerungsschaltung (10) zur Verzögerung des niederfrequenten Anteils der Luminanzsignals um die Dauer eines Halbbildes,
   eine Schaltung (11) zur Halbbildmittelung des höherfrequenten Anteils des Luminanzsignals, und
   eine Additionsschaltung (13) zur Addition des verzögerten niederfrequenten Anteils des Luminanzsignals und des gemittelten höherfrequenten Anteils des Luminanzsignals.

4. Videorecorder nach Anspruch 2 oder 3,
   **gekennzeichnet durch**
   eine vor dem Frequenzumsetzer (21) angeordnete Schaltung (15, 16) zur Aufteilung des Chrominanzsignals des Farbfernsehsignals in einen niederfrequenten und einen höherfrequenten Anteil,
   eine Verzögerungsschaltung (17) zur Verzögerung des niederfrequenten Anteils des Chrominanzsignals um die Dauer eines Halbbildes,
   eine Schaltung (18) zur Halbbildmittelung des höherfrequenten Anteils des Chrominanzsignals, und
   eine Additionsschaltung (20) zur Addition des verzögerten niederfrequenten Anteils des Chrominanzsignals und des gemittelten höherfrequenten Anteils des Chrominanzsignals.

5. Videorecorder zur Wiedergabe von Farbfernsehsignalen, die nach dem Color-Under-Verfahren aufgezeichnet sind, mit
   - einem ersten Hochpaßfilter zur Abtrennung des frequenzmodulierten Luminanzsignals aus dem wiedergegebenen Signal,
   - einem Frequenzdemodulator zur Demodulation des frequenzmodulierten Luminanzsignals,
   - einem ersten Tiefpaßfilter zur Abtrennung des Chrominanzsignals aus dem wiedergegebenen Signal,
   - einem Frequenzrückumsetzer zur Frequenzrückumsetzung des Chrominanzsignals in seinen ursprünglichen Frequenzbereich

   **gekennzeichnet durch**
   - ein parallel zum ersten Hochpaßfilter (30) angeordnetes zweites Hochpaßfilter (31), dessen untere Grenzfrequenz höher ist als die des ersten Hochpaßfilters (30),

- ein parallel zum ersten Tiefpaßfilter (39) angeordnetes zweites Tiefpaßfilter (40), dessen obere Grenzfrequenz höher ist als die des ersten Tiefpaßfilters (39), und

- eine Schalteinheit (32, 41), mittels der zwischen den genannten ersten (30, 39) und zweiten (31, 40) Filtern halbbildweise abwechselnd umgeschaltet wird.

6. Videorecorder nach Anspruch 5, **gekennzeichnet durch**

eine nach dem Frequenzdemodulator (33) angeordnete Schaltung (34, 35) zur Aufteilung des Luminanzsignals des Farbfernsehsignals in einen niederfrequenten und einen höherfrequenten Anteil,

eine Verzögerungsschaltung (36) zur Verzögerung des niederfrequenten Anteils des Luminanzsignals um die Dauer eines Halbbildes,

einen Speicher (37) zur Abspeicherung des höherfrequenten Anteils des Luminanzsignals, und

eine Additionschaltung (38) zur zeitrichtigen Addition des verzögerten niederfrequenten und des höherfrequenten Anteils des Luminanzsignals.

7. Videorecorder nach Anspruch 5 oder 6, **gekennzeichnet durch**

ein nach dem Frequenzrückumsetzer (42) angeordnetes Filter (43, 44) zur Aufteilung des Chrominanzsignals des Farbfernsehsignals in einen niederfrequenten und einen höherfrequenten Anteil, eine Verzögerungsschaltung (45) zur Verzögerung des niederfrequenten Anteils des Chrominanzsignals um die Dauer eines Halbbildes,

einen Speicher (46) zur Abspeicherung des höherfrequenten Anteils des Chrominanzsignals, und

eine Additionsschaltung (48) zur zeitrichtigen Addition des verzögerten niederfrequenten und des höherfrequenten Anteils des Chrominanzsignals.

# FIGUR 1

# FIGUR 2

# FIGUR 3

EP 0 509 266 A1

# FIGUR 4

|  | ← 1. Vollbild → | ← 2. Vollbild → | | | |
|---|---|---|---|---|---|
| a) ··· | 1A | 1B | 2A | 2B | ··· 1' |
| b) ··· | 1A | 1B | 2A | 2B | ··· 5' |

|  | ← 1. Vollbild → | ← 2. Vollbild → | | | |
|---|---|---|---|---|---|
| c) ··· | 1A | 1B | 2A | 2B | ··· 2' |
| d) ··· | 1A | 1B | 2A | 2B | ··· 6' |
| e) ··· | 1A+B | x | 2A+B | x | ··· 3' |
| f) ··· | x | 1A+B | x | 2A+B | ··· 7' |
| g) ··· | >1.1 MHz | >2.1 MHz | >1.1 MHz | >2.1 MHz | ··· 4' |
| h) ··· | <1.1 MHz | <2.1 MHz | <1.1 MHz | <2.1 MHz | ··· 8' |

# FIGUR 5

| | **EINSCHLÄGIGE DOKUMENTE** | | EP 92104841.9 | |
|---|---|---|---|---|
| Kategorie | Kennzeichnung des Dokuments mit Angabe, soweit erforderlich, der maßgeblichen Teile | Betrifft Anspruch | **KLASSIFIKATION DER ANMELDUNG (Int Cl⁵)** | |
| A | DE - A - 3 731 179 (NOKIA GRAETZ) * Zusammenfassung; Anspruch 1; Fig. 2-4 * -- | 1,2,5 | H 04 N 9/79 | |
| A | EP - A - 0 280 058 (POLAROID) * Zusammenfassung; Ansprüche 1,9 * ---- | 1,2,5 | | |
| | | | **RECHERCHIERTE SACHGEBIETE (Int Cl⁵)** | |
| | | | H 04 N 9/00 | |

Der vorliegende Recherchenbericht wurde für alle Patentansprüche erstellt.

| Recherchenort | Abschlußdatum der Recherche | Prüfer |
|---|---|---|
| WIEN | 21-07-1992 | DIMITROW |